Europäisches Patentamt

**European Patent Office**

**Office européen des brevets**

(19)

(11) Publication number: **0 244 034**

**A1**

(12) # EUROPEAN PATENT APPLICATION

(21) Application number: **87200788.5**

(22) Date of filing: **24.04.87**

(51) Int. Cl.³: **H 02 P 7/74**
**B 41 F 13/14**

(30) Priority: **25.04.86 NL 8601077**

(43) Date of publication of application:
**04.11.87 Bulletin 87/45**

(84) Designated Contracting States:
**AT BE CH DE ES FR GB GR IT LI LU NL SE**

(71) Applicant: **ELECTROPROJECT B.V.**
**Sluispolderweg 15**
**NL-1505 HJ Zaandam(NL)**

(72) Inventor: **Berings,Josephus B. M.,**
**Padlaan 11,**
**NL-1561 ZA Krommenie(NL)**

(74) Representative: **van der Beek, George Frans et al,**
**Nederlandsch Octrooibureau Johan de Wittlaan 15 P.O.**
**Box 29720**
**NL-2502 LS 's-Gravenhage(NL)**

(54) **System for speed control of anglesynchronous drive of a plurality of axes.**

(57) System with speed-regulation facility for driving a number of shafts in angular synchronism, in which the angular positions of the shafts can be adjusted with respect to each other and have to be kept constant using drive means coupled in each case to each shaft. The drive means are synchronous motors which are fed from the same power supply unit, so that synchronous running is guaranteed and at zero load the angular position of the rotating section of the synchronous motors is the same for all the motors after the synchronous start-up interval. The fixed section of the synchronous motors is rotatably constructed in order to adjust the angular positions of the rotating sections of the synchronous motors. The common power supply unit for all the synchronous motors can be regulated in frequency and voltage so that synchronous speed regulation of all the motors is possible, an increased excitation voltage being fed to the excitation winding of the said synchronous motors in the synchronous start-up interval and a temporary increase of the V/Hz value at the start of the said interval being used.

fig-6

System with speed-regulation facility for driving a number
of shafts in angular synchronism.

The invention relates to a system with speed-regulation
facility for driving a number of shafts in angular synchronism, in
which the angular positions of the shafts can be adjusted with respect to each other and have to be kept constant using drive means
coupled in each case to each shaft. Such a system is known in practice.

Such systems are used, for example, in screen printing machines for textile material and rotation presses in which the printing rollers used are regulated in speed and have to rotate in angular synchronism. At the same time, it must also be possible to
adjust and maintain the angular positions of the printing rollers
with respect to each other so that a constant and optimum printing
quality continues to be guaranteed. This is because each printing
roller represents a certain colour and a certain pattern and the
combination of said colours and patterns forms the total printed
image. Shifts between colours and/or patterns affect the quality of
the final product in a negative manner.

Usually the said printing rollers are driven from a main
motor, the rotary movement being transmitted mechanically to the
printing rollers. The angular positions of the printing rollers
with respect to each other are varied by using a mechanical differential. By adjusting the differential at the position of each printing roller, it is possible to adjust and visually assess the angular position of the printing roller concerned. The angular positions with respect to each other are then adjusted at very low rotary speed until a satisfactory printing result is obtained, whereafter a change  is subsequently made to production speed. Said production speed depends on the material to be printed so that it must
be possible to regulate the speed of the printing rollers and consequently the speed of the main drive motor. If later - after other
patterns or designs have been printed in the meantime - it is necessary to print the same patterns or designs again, all the printing rollers have to be readjusted, which is time-consuming and
therefore takes place at the expense of production time and possibly of quality. What is certain is that the same type of products
manufactured at different times cannot be completely reproducible.

-2-

In modern processes there is a need for causing the printing rollers each to be separately driven by its own drive motor in a manner such that synchronous running is guaranteed and angular displacement of the printing rollers with respect to each other is possible. For this purpose the so-called "phase-lock loop" regulation systems are used, in which each drive motor has its own shaft position detector and its own power regulator coupled to a digitally regulating computer. Said systems are technically very advanced, employ direct-current motors with critical maintenance requirements and are rather expensive.

The object of the invention is to overcome the above mentioned problems and to provide a system which is relatively simple and cheap.

According to the invention this is achieved in a system of the type mentioned in the introduction in a manner such that the drive means are synchronous motors which are fed from the same power supply unit, so that synchronous running is guaranteed and at zero load the angular position of the rotating section of the synchronous motors is the same for all the motors after the synchronous start-up interval, and that the fixed section of the synchronous motors is rotatably constructed in order to adjust the angular positions of the rotating sections of the synchronous motors. As a result of this embodiment, it is possible to use relatively cheap brushless synchronous motors which require virtually no maintenance. By using a common power supply unit for all the synchronous motors, which can be regulated in frequency and voltage, it is possible to achieve synchronous speed regulation of all the motors.

In a further embodiment according to the invention, the fixed section of each synchronous motor is arranged rotatably in bearings and is provided with means of rotation which can be operated manually or electrically. The latter consists preferably of a gear ring and a pinion engaging therewith and driven by a servomotor.

Apart from the fact that the stator and rotor functions may be interchanged, the synchronous motor consists of a fixed section, the stator fed with three-phase current, and a rotating section, the rotor. In the stator, a rotating magnetic field is produced whose rotary speed is determined by the frequency of the supply mains and the number of poles of the stator winding.

Thus, for a mains frequency of 50 Hz, the rotary speed of, for example, a two-pole three-phase winding is therefore 50 rev/sec or 3000 rev/min. In this case the rotor consist of a magnetic north pole and south pole, which is achieved by supplying the rotor windings with direct current or else by using permanent magnets. Provided excessive torque is not required, the rotor will corotate in precise synchronism with the rotating magnetic field of the stator. A certain lag, which is dependent on the load or the torque which the motor has to exert, is produced with respect to the rotating stator field. The angle by which the rotor lags with respect to the rotating stator field is called the "load angle" and increases as the load increases and, in the case of a two-pole motor, may be approx. 45°. If the load is too great, the rotor becomes "out of step" and will come to a stop.

An essential feature is that all the shafts are brought to speed in angular synchronism from their starting position (which is also the final position). For this purpose the invention provides a simple method of achieving this. The frequency of the frequency-regulated power supply unit is, for this purpose, brought slowly up from zero to the desired frequency. In doing this, it is necessay during this synchronous start-up phase to increase the excitation of the synchronous motors temporarily by impressing a considerably higher excitation voltage on the excitation winding. In this connection it is also advantageous to increase the V/Hz value of the frequency regulator temporarily, i.e. in a manner such that the motor voltage is temporarily higher than is appropriate at the actual frequency. This achieves the result that the synchronous start-up torque is sufficiently large to overcome the stationary friction and still have accelerating torque left.

In the system according to the invention it is of essential importance that the angular positions of the rotors of the synchronous motors, which each drive a shaft, are exactly and unambiguously determined. By varying the frequency (and if necessary, the voltage) of the mains supplying the stator, the synchronous rotary speed of the rotor can be regulated exactly. By supplying the synchronous motors of all the shafts from a common frequency-regulated mains supply, all the shafts will rotate synchronously starting from standstill and (apart from differences in load angle as a result of difference in torgue) will have the same angular position with respect to each other. The frequency-regulated supplying mains may, for example, be achieved by means of a synchronous generator with rotary-speed regulation facility or by means of a frequency regulator.

The required adjustability of the angular positions of the rotors or shafts with respect to each other is provided, in accordance with the invention, by turning the fixed sections or stators of the synchronous motors with respect to each other.

The elimination of the differences in angular positions, which then still occur as a result of differences in load angle, will be provided, according to the invention, by measurement of these angular differences and subsequent correction thereof by a regulation system which acts on the adjustment of the stator position.

The invention will be described in more detail on the basis of an exemplary embodiment with reference to the accompanying drawings in which the same components in the different figures are indicated by the same reference numerals and in which:

Figure 1 shows a graph of voltage against frequency of the power supply unit to be used in the system according to the invention;

Figure 2 shows diagrammatically the angular positions of the commonly supplied stators and associated rotors at load angles of 0° of three synchronous motors in the system according to the invention.

Figure 3 shows diagrammatically the angular positions of the stators and rotors of Figure 2 for varying load angles;

Figure 4 shows diagrammatically the angular positions of the stators, some stator positions being turned, and the rotors of Figure 2 for load angles of 0°;

Figure 5 shows diagrammatically the angular positions of the stators, some stator positions being turned, and the rotors of Figure 2 for varying load angles;

Figure 6 shows a view of a synchronous motor used in the system according to the invention and provided with means of rotation for turning the stator;

Figure 7 shows a block diagram of the system according to the invention in which compensation is not yet made for differences in load angles; and

Figure 8 shows a block diagram of the system of Figure 7 in which compensation in fact is made for differences in load angles.

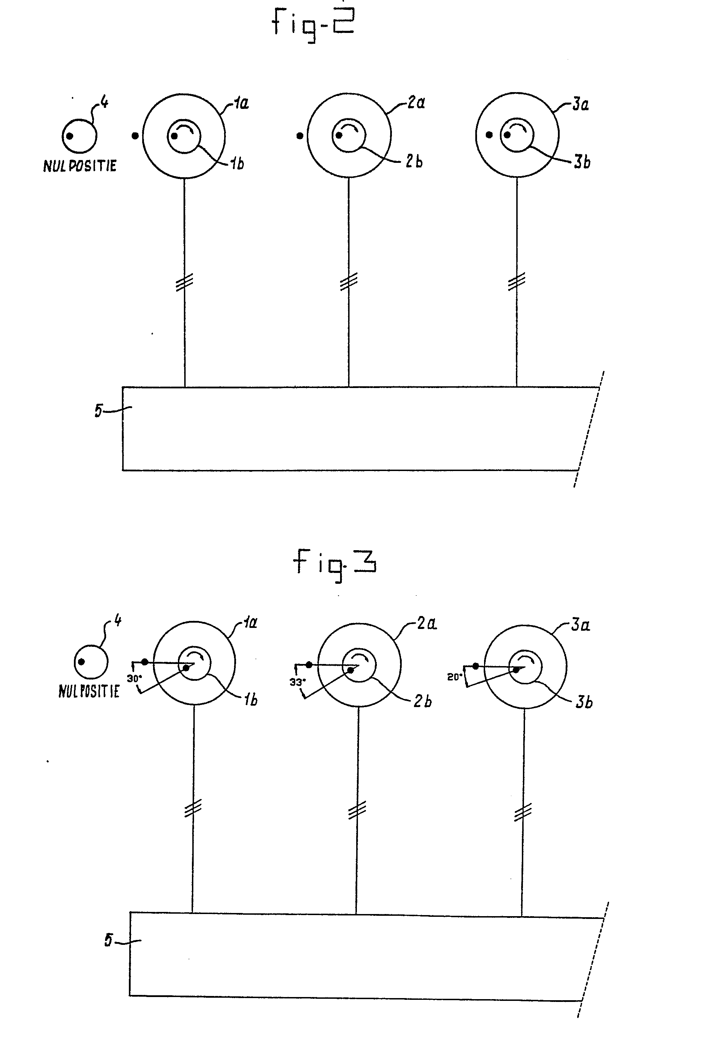

In Figures 2 to 5, the numerals 1a, 2a, 3a and 1b, 2b, 3b indicate respectively the stators and rotors of the synchronous motors of the system, the stators being commonly supplied by a power supply unit 5 such as a frequency (and voltage) regulator or a synchronous generator with rotary speed-regualtion facility. The shafts driven by the synchronous motors now have to be brought up to speed with angular synchronism from their starting position - which may also be the final position. For this purpose, the frequency of the frequency-regulated power supply unit 5 is slowly brought up to the desired frequency starting from zero. At the same time, it is a requirement that during this synchronous start-up phase the excitation of the synchronous motors is temporarily increased by impressing a considerably higher excitation voltage on the excitation winding, through which the synchronous start-up torque increases.

In this connection it is also advantageous to temporarily increase the V/Hz value of the frequency regulator, which is normally $\frac{380V}{50Hz}$ = 7,6 V/Hz (curve a in Figure 1). This means that the motor voltage is temporarily higher than is appropriate for the actual frequency, as is indicated by curve b in Figure 1. This achieves the result that the synchronous start-up torque is sufficiently large to overcome stationary friction and to have accelerating torque left.

In Figures 2 to 5 the zero position is indicated symbolically by the dot in circle 4. The dots beside the stators 1a to 3a are marker positions in the rotating field of the stator and they therefore rotate clockwise at synchronous speed. If a viewer were to rotate clockwise at the same time at synchronous speed, the dots would be stationary and would indicate, as it were, the angle with respect to the said zero position. The dots beside the rotors 1b to 3b are also marker positions which rotate clockwise with synchronous speed. It would be as if the rotating stator field and rotors were being viewed with a synchronized stroboscoop.

Figure 2 shows, with this manner of viewing, the positions of the rotating stator fields and rotors associated with three synchronous motors if all the stators are in the mechanical zero position and there are no loads, as a result of which the load angles are therefore 0°.

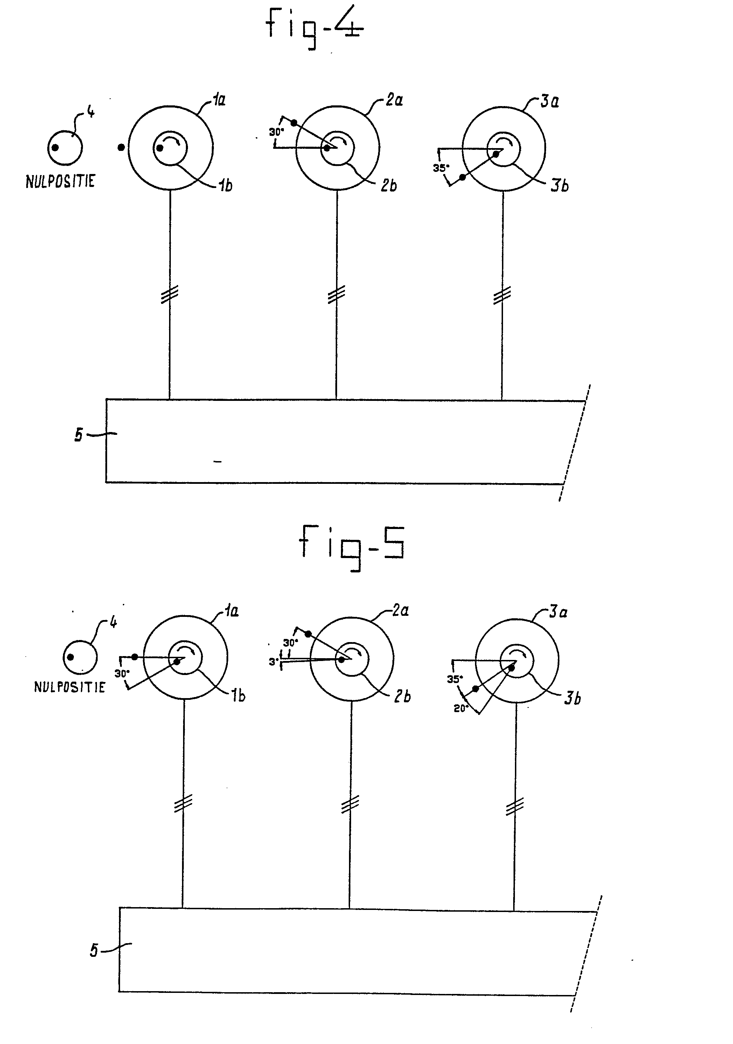

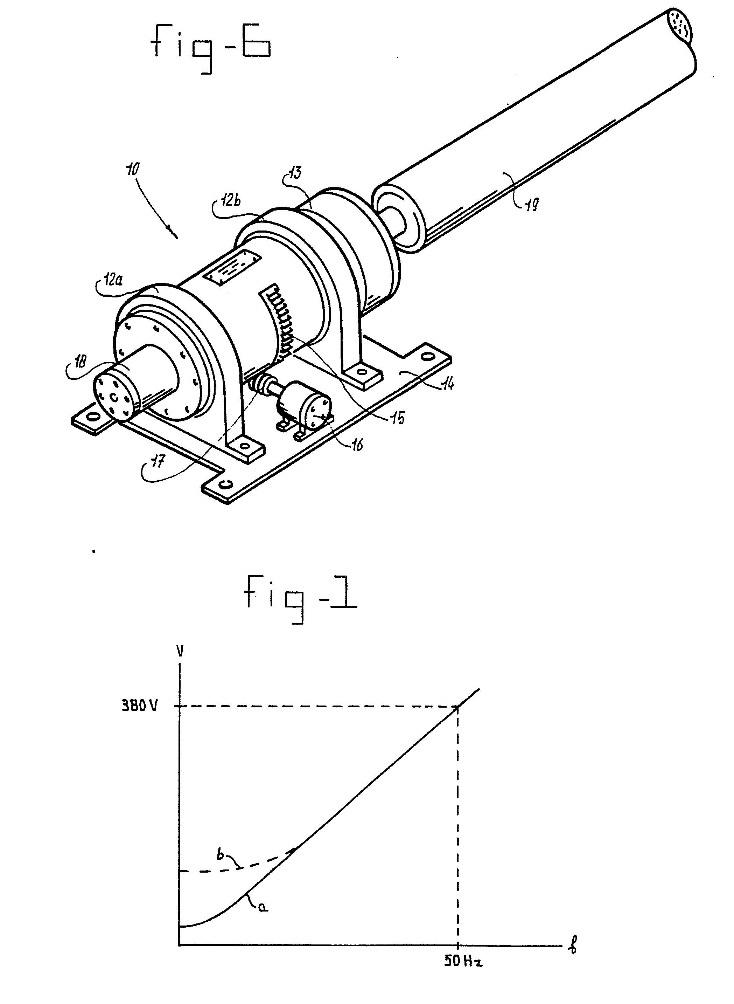

Figure 3 shows, with this manner of viewing, the positions of the rotating stator fields and rotors if all the stators are in the mechanical zero position and the load angles are respectively 30°, 33° and 20°. This means that the rotors lag behind the rotating stator fields.

Figure 4 shows, with this manner of viewing, the positions of the rotating stator fields and rotors if stator 1 is in the mechanical zero position, stator 2a is advanced by 30° and stator 3a is retarded by 35°, the load angles being 0°.

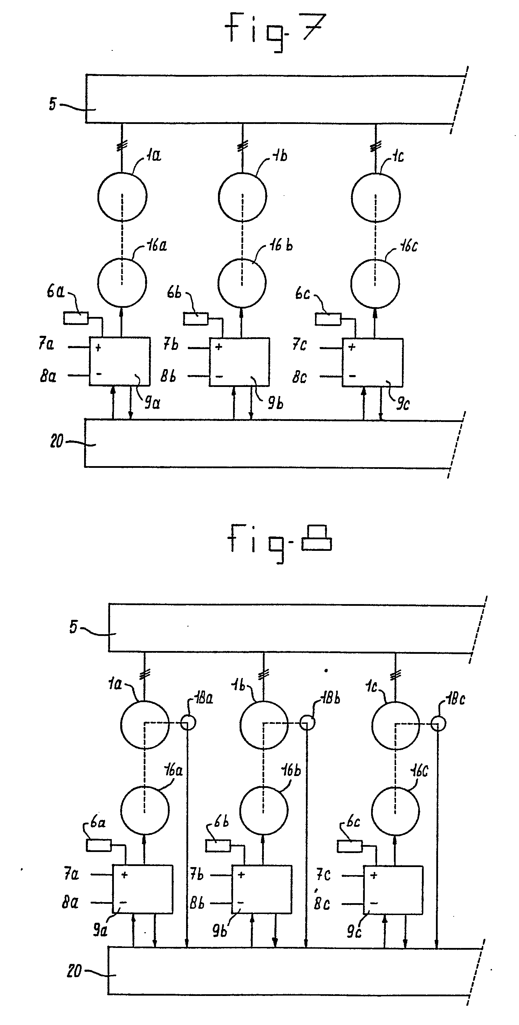

Figure 5 shows, with this manner of viewing, the position of the rotating stator fields and rotors if the mechanical positions of the stators correspond to those of Figure 4 and the load angles are respectively 30°, 33° and 20°.

Figure 6 shows a synchronous motor 10 coupled to the shaft of a printing roller 19, which motor is provided with means of rotation for adjusting the position of the stator. The synchronous motor 10 is suspended in two bearings 12a and 12b. A gearbox 13 is incorporated on the drive side for converting the rotary speed of the synchronous motor to the rotary speed for the shaft of the printing roller 19. The bearings 12a and 12b can also be disposed over the shafts on either side of the gearbox 13. The rotatably suspended motor 10 with gearbox 13 is attached to a baseplate 14 which is mounted on the frame of the printing roller machine. The cylindrical external casing or the fixed section of the motor 10 is provided with a circumferentially disposed rack 15. A servomotor 16 with a pinion 17 which engages with the rack 15 is mounted on the baseplate. On the non-driving side of the motor there is mounted a shaft position detector 18, such as a pulse generator, which is necessary if it is necessary to compensate for differences in load angles. Causing the servomotor 16 to rotate anticlockwise or clockwise adjusts the position of the stator and therefore the angular position of the rotor shaft. A hand wheel may be mounted on the shaft of the pinion at the side facing away from the servomotor in order, if necessary, to perform the adjustment of the stator manually.

The synchronous motor may be provided with means such as a microswitch which is mounted on the baseplate and interacts with a cam on the stator housing in a manner such that, when the voltage is switched on, the stator housing automatically goes to its zero position.

Figure 7 shows a block diagram of the system for adjusting the stators of three two-pole synchronous motors. As shown in Figures 2 to 5, the stators 1a, 1b, 1c are supplied by a common power supply unit 5 such as a frequency regulator. The electrical local control units 9a, 9b, 9c regulate the control of the separate stepping motors 16a, 16b, 16c and are connected to an electrical central control unit 20. The local control units 9a, 9b, 9c are, for example, each provided with a display element 6a, 6b, 6c calibrated in degrees, a + operating pushbutton 7a, 7b, 7c for the positive direction of rotating, and a - operating pushbutton 8a, 8b, 8c for the negative direction of rotation.

16a may be regarded as the main servomotor. The lead or drag of the other servomotors 16b and 16c with respect to this motor can be obtained by pressing in the + pushbutton 7b and 7c, or the - pushbutton 8b and 8c of the local control units 9b and 9c. The adjusted setting of this regulation system for a particular product can be read out and stored centrally in the memory of a central control unit 20.

The servomotor 16 may be, for example, a direct-current servomotor or a stepping motor. If a stepping motor is used, the angular position of the stator can, in a simple manner, be kept, read out and stored in the memory of the central control unit 20. Suppose use is made of servomotor having 1000 steps per revolution, and the transmission ratio between pinion 17 and rack 15 of Figure 6 is such that one revolution of the servo motor corresponds to an angular displacement of the stator of, for example, 10°. One servomotor step then corresponds to an angular displacement of the stator of 0.01°. If the zero position of the stator corresponds to the zero position of the servomotor, and the number of steps in the positive or negative direction is kept cumulatively by the central control unit, the exact stator position will be known at any instant.

If all the angular positions have been adjusted satisfactorily by means of the + and - pushbuttons for the production of a particular product "x", said positions will be stored as a "recipe" for the said product "x" by means of a particular instruction in the memory of the central control unit. If the same product "x" has to be produced again later, the setting of the stepping motors are transmitted to the local control units which bring the position of the stators to the correct angular positions for said product.

In the system according to Figure 7, the angular positions of the shafts with respct to the stators or fixed sections may differ as a result of torque loadings and differences in load angles resulting therefrom. The actual deviations on the printing rollers will be smaller as a result of the gearing ratio of the gearbox. Provided the torque loadings of all the shafts of the printing rollers are equal and reproducible, the load angles of the synchronous motors will all be equal, as a result of which the relative angular positions of the shafts with respect to each other will be equal.

Figure 8 shows a block diagram of the system, in which a correction is also made for possible differences in load angles so that the angular positions of all the shafts are exactly determined for varying load angles. For this purpose, shaft position detectors 9a, 9b, 9c are coupled to the shafts of the synchronous motors. These shaft positions detector or pulse generators may, for example, deliver 360 pulses per revolution. Each pulse generator delivers a so-called zero pulse or synchronizing pulse at the instant when a shaft passes through the neutral or "zero" position. The zero pulses and position pulses of all the pulse generators are fed to the central control unit 20. The stator 1a of the main motor remains in the zero position. If the rotor of the main motor lags, for example, by 10° as a result of the loading, the zero pulse of the pulse generator coupled to this shaft will arrive ten pulses later. The zero pulse of the main shaft is regarded as the reference for all other shafts. If, when the complete printing machine is adjusted, it appears that a good printing result is obtained if the second shaft lags by 21° (= 21 pulses) with respect to the main shaft, the central control unit 20 will transmit a correction via the local control unit 9b to the stepping motor 16b such that the stator 1b of the synchronous motor of the second shaft is turned in a manner such that the zero pulse of the second shaft arrives 21 pulses later.

If the loading of the second shaft changes during the production process, the stator 1b will undergo a correction such that the 21-pulse lag is maintained. The same applies to all the other "slave" shafts.

It will be clear that, in this system, the necessity of using a stepping motor as servomotor for the stator adjustment is no longer essential. The reason is that the information employed by the control system is provided by the zero pulses and the angular position and not the number of steps of the stepping motor. In this system, the servomotors may also be, for example, alternating-current or direct-current motors which may be driven in two directions.

-----------------

Claims

1. System with speed-regulation facility for driving a number of shafts in angular synchronism, in which the angular positions of the shafts can be adjusted with respect to each other and have to be kept constant using drive means coupled in each case to each shaft, <u>characterized in that</u> the drive means are synchronous motors which are fed from the same power supply unit, so that synchronous running is guaranteed and at zero load the angular position of the rotating section of the synchronous motors is the same for all the motors after the synchronous start-up interval, and in that the fixed section of the synchronous motors is rotatably constructed in order to adjust the angular positions of the rotating sections of the synchronous motors.

2. System according to Claim 1, <u>characterized in that</u> the common power supply unit for all the synchronous motors can be regulated in frequency and voltage so that synchronous speed regulation of all the motors is possible.

3. System according to Claim 2, <u>characterized in that</u> the power supply unit is constructed in a manner so as to feed an increased excitation voltage to the excitation winding of the said synchronous motors in the synchronous start-up interval and to use a temporary increase of the V/Hz value at the start of the said interval.

4. System according to Claim 1, <u>characterized in that</u> the fixed section of each synchronous motor is arranged rotatably in bearings and is provided with means of rotation which can be operated manually or electrically.

5. System according to Claim 4, characterized in that the means of rotation consists of a gear ring on the said fixed section and a pinion engaging therewith which is driven by a servomotor.

6. System according to Claim 5, <u>characterized in that</u> the servomotor is a stepping motor which is controlled by an electrical local control unit which comprises a manually operable control element for controlling the stepping motor in a positive or negative direction and which registers the number of steps traversed and delivers them to an electrical central control unit.

0244034

7. System according to Claim 6, <u>characterized in that</u> there is coupled to the rotating section of each synchronous motor a shaft position detector which delivers a zero pulse, if the shaft of the rotating section passes its zero position, to the central control unit so that the angular position of the rotating section is compared with the angular position of the rotating section of a synchronous motor acting as main motor, and the angular position of the associated fixed section is adjusted accordingly via the local control unit.

8. System according to Claim 7, in which the said shafts are coupled to screen-printing rollers, pressure-printing rollers or the like such as those used for textile material or printing processes, <u>characterized in that</u> the central control unit in each case stores the angular positions of the fixed sections of the synchronous motors for each process in a memory from which they can be fetched for each process to be carried out in order to adjust the required angular position of the fixed sections of the synchronous motors.

0244034

# Fig-2

NUL POSITIE

4

1a
1b

2a
2b

3a
3b

5

# Fig-3

NUL POSITIE

4

30°

1a
1b

33°

2a
2b

20°

3a
3b

5

# fig-4

NULPOSITIE

4

1a
1b

30°

2a
2b

35°

3a
3b

5

# fig-5

NULPOSITIE

4

30°

1a
1b

30°
3°

2a
2b

35°
20°

3a
3b

5

# Fig-6

# Fig-7

4/4

0244034

Fig. 7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | NL-A-6 814 170 (SIEMENS) * Page 1, line 1 - page 3, line 9; claim 1; figure 1 * & DE-A-1 588 790 | 1 | H 02 P 7/74 B 41 F 13/14 |
| A | DE-A-3 435 487 (NIPPON INSATSU) * Page 10, line 19 - page 11, line 12; figure 5; abstract * | 1 | |
| A | FR-A-1 354 766 (J. PITARD) * Page 2, right-hand column, line 31 - page 3, right-hand column, line 25; figure 1 * | 1 | |
| A | US-A-3 896 349 (V. LOZENKO et al.) * Figure 3; abstract * | 1 | |

TECHNICAL FIELDS SEARCHED (Int. Cl.4)

H 02 P
B 41 F

The present search report has been drawn up for all claims

| Place of search | Date of completion of the search | Examiner |
|---|---|---|
| THE HAGUE | 06-08-1987 | ZAEGEL B.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82